# EUROPEAN PATENT SPECIFICATION

(11) **EP 0 410 743 B1**
(45) Date of publication and mention of the grant of the patent: **21.02.1996**
(21) Application number: 90308184.2
(22) Date of filing: 26.07.1990
(51) Int. Cl.: G09G 1/16

(54) **Graphics display split-serial register system**
Graphisches Anzeigesystem mit einem geteilten seriellen Register
Système graphique d'affichage comportant un registre sériel divisé

(30) Priority: 28.07.1989 US 387569
(43) Date of publication of application: 30.01.1991
(73) Proprietor: TEXAS INSTRUMENTS INCORPORATED, Dallas Texas 75265 (US)
(72) Inventor: Ing-Simmons, Nicholas Kerin, Oakley, Bedford, MK437SS (GB); Robertson, Iain Craig, Bedford, MK42EE (GB)
(74) Representative: Abbott, David John

(56) References cited:
- EP-A- 0 245 564
- US-A- 4 689 741

## Description

This invention relates to a graphics display system and more particularly to such a system using a split-serial register for controlling data transfer to the graphic display.

In video graphics systems the number of pixels on a screen and thus the number of points which must be read from the display memory is significant. Also the amount of display memory is critical for economical utilization of any system. In typical systems, the display memory holds a line of data which must be read to the screen in a short interval of time. This is accomplished by arranging the memory with a serial register which will remove a full line of data from the memory and transfer that line to the screen.

It is always desirable to pack the memory as fully as possible and to use the entire memory space whenever possible. It is also desirable to design memory systems to accommodate different graphics requirements and changing physical constraints. Thus, with present memory systems it is customary to use VRAMS which have 512 bits in a row length. These memories have several planes, usually four each, and are arranged to fill the bus for each memory read cycle. Thus, for a 32 bit bus, 8 VRAMS, each having 4 planes, could be used.

Under this arrangement the serial register for each plane of each memory would be 512 bits long, thereby transferring 16384 bits to the display for each memory-to-serial register read cycle. These 16384 bits represent data for 2048 display pixels, assuming each pixel contains 8 bits. However, assume each scan line only requires 1280 pixels. Thus, on every line of memory 768 pixels from each row of memory cannot be displayed. This memory is difficult to use for other purposes and thus, is effectively wasted.

One arrangement which has been considered for utilizing the full memory line is to use the remaining 768 pixels for the next line. However, under this scheme, the register would have to be reloaded during the time the information is being sent to the screen. Unless special high speed hardware is used, such a midline reload of the register would be visible to a viewer and highly objectionable.

An improvement over such an arrangement is the use of a parallel set of shift registers where data is read out of alternate registers. This arrangement also suffers from the situation just discussed in that the size of the shift registers again is dependent upon the anticipated size of the screen.

In EP-A-0,245,564 there is disclosed a bit map memory connected to four shift registers which can be loaded in parallel with pixel information from the memory. At least one shift register is clocked at a suitable rate to feed data for display to a video display device. The other shift registers are clocked at different rates to suit different peripheral units. Masks can be inserted in the paths from the bit map memory to the shift registers for selectively removing certain of the pixel bits.

In US-A-4,689,741 a video RAM unit is described in which the RAM is divided into two halves from which the outputs from the addressed rows are applied in parallel to two long shift registers. A multiplexer receives outputs from the shift registers clocked by a common clock signal to produce a serial data output. The two shift registers are each split into four equal parts which can be selectively accessed so that different numbers of bits can be shifted out of the rows of the RAM.

Thus, there is a need in the art for a serial register graphic reloading system which allows for continuously filling the pixels on a line of a graphics display screen, while being independent of the screen line length and which conserves memory and register space.

According to one aspect of the present invention there is provided a graphics processing system comprising:
a graphics presentation medium; and
a split register for serially transferring data on a line by line basis to the medium, the register including a first portion (A) and a second portion (B), each portion being reloadable during the transfer of data from the other portion;
characterised in that the register is a serial register and the system further comprises a monitoring register for tracking the address location in the register of information transferred to said medium and control circuitry enabled by said monitoring register for controlling the serial transfer of data from the first and second register portions (A,B) one after the other by applying clock signals to one of said portions (A,B) at a time to effect the transfer of data from that portion until all of the data stored in that portion has been transferred.

According to a second aspect of the present invention there is provided a method of producing a graphics display on a graphics presentation medium using a register split into two portions (A,B), each portion being operable for serially transferring data from that portion while allowing the other portion to be reloaded with data at the same time,
characterised in that the method comprises the steps of:
providing the split register as a serial register,
further providing a monitoring register,
using the monitoring register to track the address location in the split register of data as it is transferred to the presentation medium, and
controlling, by reference to the address location tracked by the monitoring register, the serial transfer of data from the two portions (A,B) of the split register one after the other by applying clock signals to one of the portions (A,B) at a time to effect the transfer of data from that portion until all of the data stored in that portion has been transferred.

A split-serial register is utilized in a graphic processing system to control screen transfer information such that information is shifted continuously from the shift registers during each line output, thereby providing uninterrupted data flow to the screen. The system allows for mid-line reloading without detection by a viewer.

Both halves of the serial register are adapted to be loaded during the horizontal blanking (interline flyback) screen refresh cycle at the same time the column address of the beginning point of the line is provided to an address register. When the blanking period ends and the clock begins, the data is outputted serially from one half of the data register to the screen, beginning from the bit corresponding to the column address. The address of the serial register then logically counts (in conjunction with the shifting of data from the register) from the starting address up to all 1's and then rolls over to all 0's. At the zero point shifting of data automatically begins from the other half of the serial register. This then allows the currently unused half of the register to be available for receiving the data corresponding to the next portion of the screen information.

The same cycle is repeated for the previously unused half (now the active half) of the register with the address register counting up to all 1's and rolling over again to 0's. When the address again reaches zero, the other half of the register, which has been reloaded with new information pertaining to a continuation of the row, then begins to shift out its data. At this time, new data is provided to the other half of the serial register. This alternate operation continues and can continue until the end of the graphic row, thereby providing a continuous flow of information to the screen with midline updating invisible to the user.

A potential problem exists in that if the beginning point of a new line is more than half way along the serial register, then the idle half of the register, i.e., the first half of the serial register, contains the information pertaining to the end of the previous line and not to the next part of the current line. Thus, the first half of the register must be updated to insure that after the second half of the serial register is unloaded, the first half will contain the next following set of data points. This problem is solved by including a split serial register refresh cycle where the address of the next half row is generated immediately following the ordinary horizontal blanking screen refresh. This is the same type of cycle used for the midline reload screen refresh cycles and only loads half of each of the serial registers.

There is a technical advantage using a split serial register to effectively create a continuous flow of data to a video screen. While one part of the register is unloading data to the screen, the other part of the register is receiving data from the memory. An address control register is used to keep track of the positional location of the data with respect to the serial register and the screen.

These and other objects of the present invention will be readily understood from the following Description, taken in conjunction with the Drawings, in which:
FIGURE 1 illustrates a block diagram of a computer with graphics capability constructed in accordance with the principles of the present invention;
FIGURE 2 illustrates the block diagram of the preferred embodiment of the graphics processing circuit of the present invention;
FIGURE 3 (shown on sheet 2) shows an expanded, stylized view of a video memory operating in conjunction with a split serial register to illustrate one embodiment of the present invention;
FIGURE 4 shows a graphic display for illustrative purposes;
FIGURE 5 shows a memory array for illustrative purposes;
FIGURES 6, 7 & 8 show bits in the serial register at different times;
FIGURES 9 and 10 (shown on sheet 1) show two possible row and column address arrangements for different size memories;
FIGURES 11, 12 and 13 show mask bits for controlling the tap-point of the serial registers in accordance with different address physical configurations;
FIGURE 14 shows an algorithm and flow chart for calculating control of the serial registers; and
FIGURES 15-20 show bits in the control registers in accordance with the illustrative example of the invention.

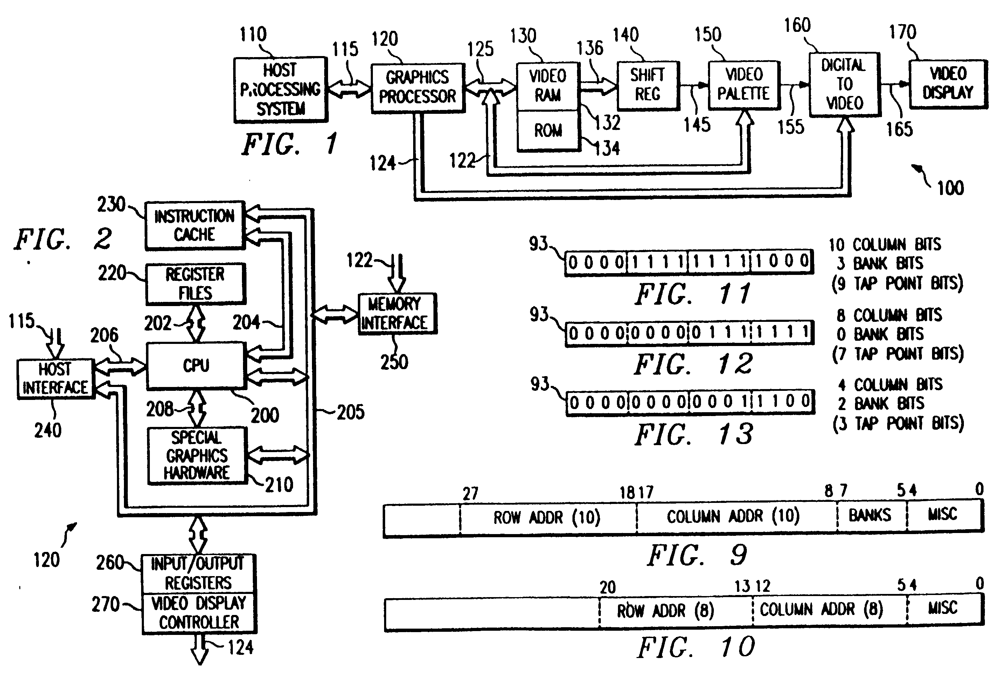

Before moving into the detailed discussion of the invention, it might be helpful to briefly review, with respect to FIGURES 1 and 2, the basic operation of a graphic processor operating in conjunction with a host system. A more complete detailed discussion can be found in patent application serial No. 346,388, filed April 27, 1989 (Attorney's Docket No. TI-9484B), and assigned to the assignee of this application. The aforementioned application is hereby incorporated by reference. Also incorporated by reference herein is Texas Instruments Corporation User's Guides TMS 34010 and TMS 34020 and Specifications TMS 34020/TMS 34082 and TMS 44C251, all of which documents are currently available to the general public from Texas Instruments Corporation.

For convenience and ease of understanding the inventive concepts taught herein there has been no attempt to show each and every operation and data movement since the actual embodiment of the invention in a system will, to a large degree, depend upon the actual system operation in which the inventive concept is embodied.

FIGURE 1 illustrates a block diagram of graphics computer system 100 which is constructed in accordance with the principles of the present invention. Graphics computer system 100 includes host processing system 110, graphics processor 120, memory 130, shift register 140, video palette 150, digital to video converter 160, and video display 170.

Host processing system 110 provides the major computational capacity for the graphics computer system 100. Host processing system 110 preferably includes at least one microprocessor, read only memory, random access memory and assorted peripheral devices for forming a complete computer system. Host processing system 110 preferably also includes some form of input device, such as a keyboard or a mouse, and some form of long term storage device such as a disk drive. The details of the construction of host processing system 110 are conventional in nature and known in the art, therefore the present application will not further detail this element. The essential feature of host processing system 110, as far as the present invention is concerned, is that host processing system 110 determines the content of the visual display to be presented to the user.

Graphics processor 120 provides the major data manipulation in accordance with the present invention to generate the particular video display presented to the user. Graphics processor 120 is bidirectionally coupled to host processing system 110 via host bus 115. In accordance with the present invention, graphics processor 120 operates as an independent data processor from host processing system 110; however, it is expected that graphics processor 120 is responsive to requests from host processing system 110 via host bus 115. Graphics processor 120 further communicates with memory 130, and video palette 150 via video memory bus 122. Graphics processor 120 controls the data stored within video RAM 132 via video memory bus 122. In addition, graphics processor 120 may be controlled by programs stored in either video RAM 132 or read only memory 134. Read only memory 134 may additionally include various types of graphic image data, such as alphanumeric characters in one or more font styles and frequently used icons. In addition, graphics processor 120 controls the data stored within video palette 150. Lastly, graphics processor 120 controls digital to video converter 160 via video control bus 124. Graphics processor 120 may control the line length and the number of lines per frame of the video image presented to the user by control of digital to video converter 160 via video control bus 124.

Video memory 130 includes video RAM 132 which is bidirectionally coupled to graphics processor 120 via video memory bus 122 and read only memory 134. As previously stated, video RAM 134 includes the bit mapped graphics data which controls the video image presented to the user. This video data may be manipulated by graphics processor 120 via video memory bus 122. In addition, the video data corresponding to the current display screen is output from video RAM 132 via video output bus 136. The data from video output bus 136 corresponds to the picture element to be presented to the user. In the preferred embodiment, video RAM 132 is formed of a plurality of TMS44251 256KX4 dynamic random access integrated circuits available from Texas Instruments Corporation, the assignee of the present application. The TMS44251 integrated circuit includes dual ports, enabling display refresh and display update to occur without interference.

Shift register 140 receives the video data from video RAM 132 and assembles it into a display bit stream. In accordance with the typical arrangement of video random access memory 132, this memory consists of a bank of several separate random access memory integrated circuits. The output of each of these integrated circuits is typically only one or four bits wide. Therefore, it is necessary to assemble data from a plurality of these circuits in order to obtain a sufficiently high data output rate to specify the image to be presented to the user. Shift register 140 is loaded in parallel from video output bus 136. This data is output in series on line 145. Thus, shift register 140 assembles a display bit stream which provides video data at a rate high enough to specify the individual dots within the raster scanned video display.

Video palette 150 receives the high speed video data from shift register 140 via bus 145. Video palette 150 also receives data from graphics processor 120 via video memory bus 122. Video palette 150 converts the data received on bus 145 into a video level output on bus 155. This conversion is achieved by means of a look-up table which is specified by graphics processor 120 via video memory bus 122. The output of video palette 150 may comprise color hue and saturation for each picture element or may comprise red, green and blue primary color levels for each pixel. The table of conversion from the code stored within video memory 132 and the digital levels output via bus 155 is controlled from graphics processor 120 via video memory bus 122.

Digital to video converter 160 receives the digital video information from video palette 150 via bus 155. Digital to video converter 160 is controlled by graphics processor 120 via video control bus 134. Digital to video converter 160 serves to convert the digital output of video palette 150 into the desired analog levels for application to video display 170 via video output 165. Digital to video converter 160 is controlled for a specification of the number of pixels per horizontal line and the number of lines per frame, for example, by graphics processor 120 via video controller bus 124. Data within graphics processor 120 controls the generation of the synchronization and blanking signals and the retrace signals by digital to video converter 160. These portions of the video signal are not specified by the data stored within video memory 132, but rather form the control signals necessary for specification of the desired video output.

Lastly, video display 170 receives the video output from digital to video converter 160 via video output line 165. Video display 170 generates the specified video image for viewing by the operator of graphics computer system 100. It should be noted that video palette 150, digital to video converter 160 and video display 170 may operate in accordance to two major video techniques. In the first, the video data is specified in terms of color hue and saturation for each individual pixel. In the other technique, the individual primary color levels of red, blue and green are specified for each individual pixel. Upon determination of the design choice of which of these major techniques to be employed, video palette 150, digital to converter 160 and video display 170 must be constructed to be compatible to this technique. However, the principles of the present invention in regard to the operation of graphics processor 120 are unchanged regardless of the particular design choice of video technique.

FIGURE 2 illustrates graphics processor 120 in further detail. Graphics processor 120 includes central processing unit 200, special graphics hardware 210, register files 220, instruction cache 230, host interface 240, memory interface 250, input/output registers 260 and video display controller 270.

The heart of graphics processor 120 is central processing unit 200. Central processing unit 200 includes the capacity to do general purpose data processing including a number of arithmetic and logic operations normally included in a general purpose central processing unit. In addition, central processing unit 200 controls a number of special purpose graphics instructions, either alone or in conjunction with special graphics hardware 210.

Graphics processor 120 includes a major bus 205 which is connected to most parts of graphics processor 120 including the central processing unit 200. Central processing unit 200 is bidirectionally coupled to a set of register files, including a number of data registers, via bidirectional register bus 202. Register files 220 serve as the depository of the immediately accessible data used by central processing unit 200. As will be further detailed below, register files 220 include, in addition to general purpose registers which may be employed by central processing unit 200, a number of data registers which are employed to store implied operands for graphics instructions.

Central processing unit 200 is connected to instruction cache 230 via instruction cache bus 204. Instruction cache 230 is further coupled to bus 205 and may be loaded with instruction words from video memory 132 (FIGURE 1) via video memory bus 122 and memory interface 250. The purpose of instruction cache 230 is to speed up the execution of certain functions of central processing unit 200. A repetitive function or function that is used often within a particular portion of the program executed by central processing unit 200 may be stored within instruction cache 230. Access to instruction cache 230 via instruction cache bus 204 is much faster than access to video memory 130. Thus, the program executed by central processing unit 200 may be speeded up by preliminarily loading the repeated or often used sequences of instructions within instruction cache 230. Then these instructions may be executed more rapidly because they may be fetched more rapidly. Instruction cache 230 need not always contain the same sets of instructions, but may be loaded with a particular set of instructions which will be often used within a particular portion of the program executed by central processing unit 200.

Host interface 240 is coupled to central processing unit 200 via host interface bus 206. Host interface 240 is further connected to host processing system 110 (FIGURE 1) via host system bus 115. Host interface 240 serves to control the communication between host processing system 110 and graphics processor 120. Host interface 240 controls the timing of data transfer between host processing system 110 and graphics processor 120. In this regard, host interface 240 enables either host processing system 110 to interrupt graphics processor 120 or vice versa enabling graphics processor 120 to interrupt host processing system 110. In addition, host interface 240 is coupled to major bus 205 enabling host processing system 110 to control directly the data stored within memory 130. Typically, host interface 240 would communicate graphics requests from host processing system 110 to graphics processor 120, enabling the host system to specify the type of display to be generated by video display 170 and causing graphic processor 120 to perform a desired graphic function.

Central processing unit 200 is coupled to special graphics hardware 210 via graphics hardware bus 208. Special graphics hardware 210 is further connected to major bus 205. Special graphics hardware 210 operates in conjunction with central processing unit 200 to perform special graphic processing operations. Central processing unit 200, in addition to its function of providing general purpose data processing, controls the application of the special graphics hardware 210 in order to perform special purpose graphics instructions. These special purpose graphics instructions concern the manipulation of data within the bit mapped portion of video RAM 132. Special graphic hardware 210 operates under the control of central processing unit 200 to enable particular advantageous data manipulations regarding the data within video RAM 132.

Memory interface 250 is coupled to bus 205 and further coupled to video memory bus 122. Memory interface 250 serves to control the communication of data and instructions between graphics processor 120 and memory 130. Memory 130 includes both the bit mapped data to be displayed via video display 170 and instructions and data necessary for the control of the operation of graphics processor 120. These functions include control of the timing of memory access, and control of data and memory multiplexing. In the preferred embodiment, video memory bus 122 includes multiplexed address and data information. Memory interface 250 enables graphics processor 120 to provide the proper output on video memory bus 122 at the appropriate time for access to memory 130.

Graphics processor 120 lastly includes input/output registers 260 and video display controller 270. Input/output registers 260 are bidirectionally coupled to bus 205 to enable reading and writing within these registers. Input/output registers 260 are preferably within the ordinary memory space of central processing unit 200. Input/output registers 260 include data which specifies the control parameters of video display controller 270. In accordance with the data stored within input/out registers 260, video display controller 270 generates the signals on video control bus 124 for the desired control of digital to video converter 160. Data within input/output registers 260 includes data for specifying the number of pixels per horizontal line, the horizontal synchronization and blanking intervals, the number of horizontal lines per frame and the vertical synchronization and blanking intervals. Input/output registers 260 may also include data which specifies the type of frame interlace and specifies other types of video control functions. Lastly, input/output registers 260 is a depository for other specific kinds of input and output parameters which will be more fully detailed below.

Graphics processor 120 operates in two differing address modes to address memory 130. These two address modes are x y addressing and linear addressing. Because the graphics processor 120 operates on both bit mapped graphic data and upon conventional data and instructions, different portions of the memory 130 may be accessed most conveniently via differing addressing modes. Regardless of the particular addressing mode selected, memory interface 250 generates the proper physical address for the appropriate data to be accessed. In liner addressing, the start address of a field is formed of a single multibit linear address. The field size is determined by data within a status register within central processing unit 200. In x y addressing the start address is a pair of x and y coordinate values. The field size is equal to the size of a pixel, that is the number of bits required to specify the particular data at a particular pixel.

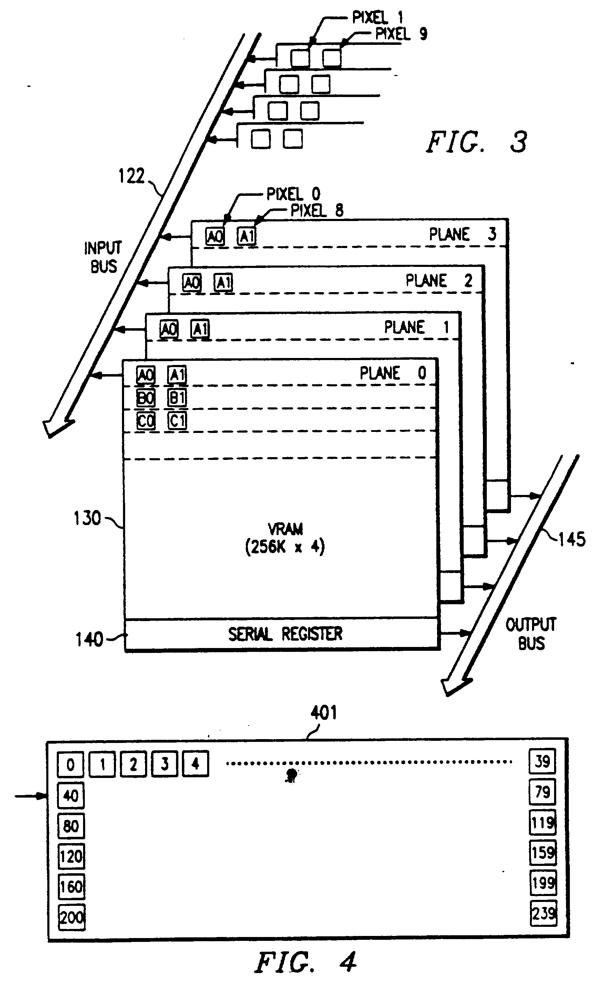

Turning now to FIGURE 3, a brief discussion of the memory structure of a typical graphics memory system is in order before progressing to the actual detailed description of the functioning of the embodiment of this invention. While there are many memory structures and system which could be used, it has become typical to use a structure, such as shown in FIGURE 3, which uses eight VRAM memories 130 in an array. Each VRAM memory, or unit, having four sections, or planes, 0, 1, 2 and 3. The construction of each plane is such that a single data lead is used to write information to that plane. In a system which uses a 32 bit data bus, such as data bus 122, there would be 8 VRAM memories (two of which are shown in FIGURE 3) each VRAM memory having four data leads connected to the input data bus.

Thus, for a 32 bit data bus, VRAM memory 130 would have its four data leads connected to data bus leads 0, 1, 2, 3 respectively. Likewise, the next VRAM memory would have its four leads 0, 1, 2, 3 connected to data bus leads 4, 5, 6, 7, respectively. This continues for the remaining six VRAM's such that the last VRAM has its leads connected to leads 28, 29, 30 31 of bus 122.

The memories are arranged such that the pixel information for the graphics display is stored serially across the planes in the same row. Assuming a four bit per pixel system, then the bits for each pixel are stored in a separate VRAM memory. In such a situation, pixel 0 would be in the first VRAM and pixel 1 would be in the second VRAM. The pixel storage for pixels 2 through 7 are not shown. The pixel information for pixel 8 then would be stored in the first VRAM, still in row 0 but in column 2 thereof. The reason for this arrangement of pixel information will be more fully appreciated from an understanding of how information is retrieved from the memory.

Continuing with FIGURE 3, each VRAM plane has a serial register 140 for shifting out information from a row of memory. The outputs from these registers are connected to bus 145 in the same manner as the data input leads are connected to the input bus. Thus, data from a row of memory, say row 0, would be moved into register 140. This would occur for each plane of the eight memory array.

Looking at data output bus 145 then at an instant of time the first bit in each shift register would be on the bus. Thus, assuming row 0 is being outputted to the bus, the bus would have on it's lead 0 the row 0, bit A0 (plane 0) of memory 130. Bus 145 lead 1 would have on it row 0, bit A0 (plane 1), while lead 2 would have row 0, bit A0 (plane 2) and lead 3 would have on it row 0, bit A0 (plane 3). These bits would be followed by the bits from the next VRAM. Thus, at a first instant of time, data bus 145 would have on it the four bits forming pixel 0 followed by the four bits forming pixel 1, followed by the four bits forming pixel 2. This would continue until the 32 bits forming the 8 pixels 0-7 were on the consecutive leads of data bus 145. These bits would be supplied to the graphics display and the shift registers would all shift one position providing the bus with pixel information for the next 8 pixels, namely pixels 8 through 15. This shifting would then continue until the entire row was shifted out and then a new line would be selected for loading into the output serial registers.

Up to this point we have assumed that the bit information per pixel is 4 bits. If the pixel information were to be, say 8 bits, then two VRAMs would have to be used per pixel. This would change the bit patterns somewhat. Also, it should be noted that memory sizes and structures continue to vary and the size and structure shown are only for illustrative purposes and this invention can be used with many different memory configurations and with different pixel sizes.

As discussed previously, the serial register for each plane of each memory would be 512 bits long thereby transferring 16384 bits to the display for each memory-to-serial register read cycle. These 16384 bits represent data for 2048 display pixels, assuming each pixel contains 8 bits. However, assume each scan line only requires 1280 pixels. Thus, on every line of memory 768 pixels from each row of memory cannot be displayed. This memory, as will become clearer as we progress herein, is difficult to use for other purpose and thus is effectively wasted.

To solve the problem, the serial output register has been split in half and each half is used to output data from the VRAM. While it is understood that 32 shift registers are used, our discussion will focus on only one plane of the memory with the understanding that all planes work in the same manner. The two halves of the register are known as half A and half B. The object of the serial register is to take from memory an entire row of screen memory and present that row to the screen pixel-by-pixel in a smooth, even flow.

As discussed above, if this were to occur with a single, unsplit serial register, then the information for one entire scan line of the display would have to be moved from memory 130 into the serial register and then shifted onto the screen at the screen clocking rate. This, then, would require each row of memory to contain only one line (or full multiples thereof) of screen information. That is not the case, as we will see, with a split serial register, where bits can be shifted from the A section while other bits are loaded into the B section and shifted to the screen from the B section while other bits are loaded into the A section.

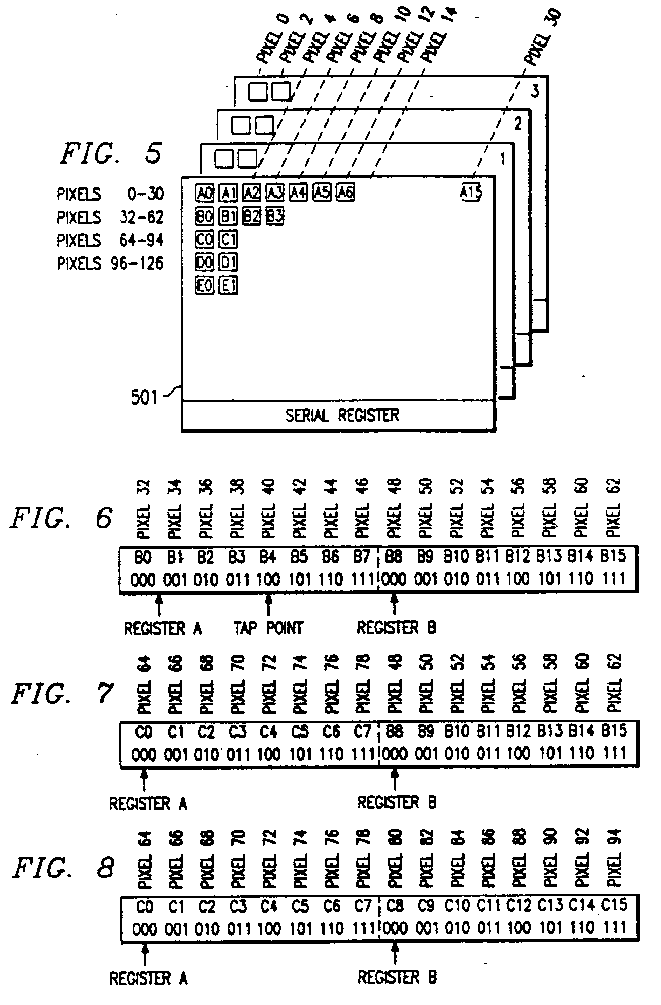

Turning now to FIGURE 4, there is shown a graphics screen 401 having 39 pixels across its face and several rows of pixels down. It must be understood that the numbers used here are for illustration only and bear no resemblance to the number of pixels, typically 1280, across the face of an actual graphics screen. The actual numbers are so high that the operation of the invention will become burdensome if the example cited were to use numbers approaching those actually found in typical systems. The same holds true for the discussion of memory 501, FIGURE 5, which is to follow and system arrangements using real numbers will serve only to obscure the discussion. In fact, as will be seen, memory 501 used for discussion purposes has less column capacity (16), in terms of pixels, than does screen 401. In practice, this would typically be the reverse.

Digressing momentarily, a typical system having 1280 pixels per line and 1024 lines would be refreshed at the rate of sixty times a second and thus pixels must be displayed at the rate of one every 12.7ns. Using an 8 bit pixel where two 4 bit VRAMS provide data for one pixel, 4 VRAM sets would be connected to the 32 bit bus. This would require clocking the VRAMS at a rate of once every 50.8ns which is a frequency of 19.6MHZ. With data being moved at such high speeds, any small pause (such as to reload the serial register) is noticeable.

Turning now to FIGURE 5, memory 501 is shown with four planes. It will be assumed that each pixel has 4 bits. For our purposes herein we will also assume that only two such memory units are being used, one containing even pixels and one (not shown) containing odd pixels. This would result in use of only 8 bits, or leads, of the bus, four bits from each memory unit. We will also assume that the memory has only 16 columns, labeled 0 through 15. Thus, row 0 is labeled A0 through A15 while row 1 is labeled B0 through B15. If we further simplify our discussion by restricting the discussion to the memory unit containing only the even pixels, then it can be thought of that bit A0 represents data for pixel 0 and bit A1 represents data for pixel 2. This follows since the A0 bit in the unseen second VRAM would contain information of pixel 1.

Following this highly impractical, but illustrative, embodiment then would result in information for (even) pixels 0-30 being in row A, information for (even) pixels 32-62 being in row B, etc, as shown in FIGURE 5.

Now let us assume that it is desired to transfer to the screen the pixel information for screen pixels 40-79 (FIGURE 4) representing the pixels necessary for the second row of the screen.

To accomplish this task the system sends to the memory the instruction bits which will address the memory at row B, since the information for the pixels 40-79, as discussed above, reside in rows B and C of the memory, FIGURE 5.

This operation will result in the serial register being loaded with the pixel information for pixels 32-62 from row B. This is shown in FIGURE 6. However, if the entire register were to be shifted to the screen, bits B0 through B3 would also be shifted and this would cause difficulties since these bits belong to pixels 32-38 which (as seen in FIGURE 4) are on row 0 of the screen. To avoid this problem, the processor, not shown, which controls the memory transfer keeps track of the proper bit position from which to begin shifting and presents this information to memory as part of the aforementioned instruction. This position is known as the tap point.

In order to control the split register aspect of the operation, it is necessary to know when to reload the first part of the register, i.e., when data is being removed from the second part and data has already been removed from the first part, or when the data in the first part pertains to a prior screen row as can happen immediately after the fly back interval. It is, of course, also necessary to know when to reload the second part of the register, i.e., when data is being read from the first part after data has been read from the second part. To accomplish this function, a counter is used to keep track of the position of the serial register active at a given time. For the counter to operate properly, it must know the beginning point (tap point) in the register of the first data shift. This is necessary, since, as discussed above, the starting point is not necessarily at the beginning of the memory row. Several steps must be taken then to calibrate the counter on a row by row basis to control the loading and reloading of the two halves of the serial register.

Control of the serial register is such that when the first half of the register is finished sending data it can be cleared and reloaded so that while the bits are being sent from the second half of the register new data bits can be loaded in the first half. If, in fact, the bits to be sent first were to be in the second half of the register, the B half, then the A half would have to be reloaded immediately. This fact also must be determined. These determinations are made from the address information provided to the memory and are dependent upon the bit positions and number of bits necessary to specify an address.

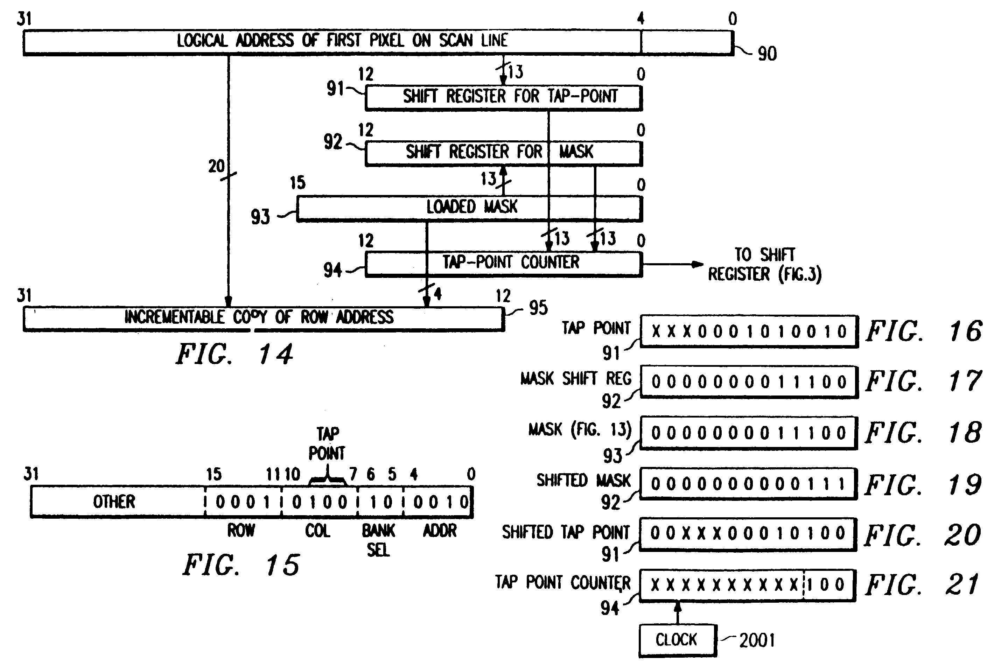

As an example of the problem let us look at some typical address bit configurations with respect to FIGURES 9 and 10. FIGURE 9 shows a 10 bit row and column address preceded by 3 bank select bits and 5 miscellaneous address bits. FIGURE 10 shows 8 bit row and column address bits preceded only by the miscellaneous address bits.

Masks are created by the user to tailor the system configuration. FIGURE 11 shows a mask for use with the FIGURE 9 address configuration while FIGURE 12 shows a mask for use with the FIGURE 10 configuration. FIGURE 13 shows the mask that will be used by the system that we are discussing, namely three tap point bits (16 possible columns, 8 in each half-shift register) preceded by two bank select bits. These bits were added for the sake of discussion.

In FIGURE 14, there is a diagram laying out how these masks are to be used. FIGURES 15 through 20 illustrate our example.

FIGURE 15 shows the row and column address bits for row 1, column 4 of the memory which, it will be recalled, is where the first pixel 40 for the selected screen row resides. The bit word depicted in FIGURE 15 also has other address bits 0-4, and bank bits 5-6. The tap point bits are loaded into tap point register 91. The tap point is defined as the bit position in the register which will be read to the bus first. This tap point is calculated from the address information of FIGURE 15. In our example, the first five bits of the address (0-4) can be ignored since they would be constant for all configurations as a design matter. The next thirteen bits of the address are transferred to tap register 91, FIGURE 16.

As shown in FIGURES 17 and 18, and as controlled by FIGURE 14, mask 93, which was created for our example system (FIGURE 13), is copied into mask shift register 92. This mask serves to adjust the tap point for the possible variation of bank select bits. In our example there were two such bits and thus the first two bits of the mask are 0's. A clock then shifts registers 92 and 91 to the right until a 1 appears in the right most position of shift register 92 (FIGURE 19). This operation serves to remove the bank bits from the tap point, which then becomes 100 as seen from register 91, FIGURE 20.

This is then loaded into tap point counter 94 (FIGURE 21). The shifted mask 92 (FIGURE 19 determines how many bits of counter 94 are significant.) This tap point, which is defined as the position in the serial register to be read first to the data bus, can be seen in FIGURE 6, corresponding to pixel 40 controlled by bit B4 in half-register A.

Register A is selected, as apposed to register B, since the left most column bit equals 0 in FIGURE 15. Had the left most position of the column address contained a 1, the B half of the serial register would have been selected.

Once the shifted tap point has been selected, clock 2001, operating in conjunction with the memory shift clock, serves to increment the tap point shift register in conjunction with data being read from the serial register. Thus, when the tap point register contains all 111's it signifies that the data from position 111 of half-register A, FIGURE 6, is being read to the bus. This corresponds to pixel 46, memory bit B7. The tap point counter overflows to 000 as shifting begins from half-register B where memory positions B8 to B15 are in turn sent to the graphics display. Note that the register operation just described does not control the actual shifting out of data, but controls the reloading of data into the serial register.

At this time, as shown in, FIGURE 7, half-register A is cleared and information from memory positions C0 to C7, the next memory row, are loaded into half-register A. This alternate operation will continue until the screen reaches the end of the row, i.e. pixel 79 is sent to the screen. The half-row reload requires an address, which points to the 1st bit in the half row being reloaded. This addresss comes from "incrementable copy of row address", 95. Register 95 is loaded from register 90 when register 91 is loaded from register 90. It is then incremented at the left-most bit of the column address to point to the next half row. Register 93 is used to determine the bit position for the increment (the bit to the left of the left-most 1). When the address is output, register 93 is also used to ensure that all bits to the right of this point are zero (signifying a zero tap address, pointing to the 1st bit in the shift register). Each time the counter overflows, the address in this register is output, and then incremented.

Thus, when the tap point clock again reaches 111 and pixel 62, memory location B15, is less than pixel 79 the tap point counter resets to 000 and, as shown in FIGURE 8, as memory bits C0 to C7 are transferred from half-register A to the bus. At this time half-register B is loaded with memory bits C8 to C15. However, when the clock again arrives at 111 the fly back interval is also reached and the registers are reset with the next full line to be read to the screen as determined by the processor. At this time the cycle repeats and a new tap point is calculated.

If the new tap point indicates that the first bit to be read is in the B half of the register, which would be the case if pixel row 80 to 119 were to be next, then the A half of the register would appear as shown in FIGURE 8 with the tap point at position C8. This would mean that the A half-register must be cleared immediately and loaded with memory bits D0 to D7 in preparation for the tap point counter again reaching 111 and rolling over so as to follow the readout of data from the first half-register A.

## Claims

1. A graphics processing system comprising:
a graphics presentation medium (170); and
a split register (140) for serially transferring data on a line by line basis to the medium, the register including a first portion (A) and a second portion (B), each portion being reloadable during the transfer of data from the other portion;
characterised in that the register (140) is a serial register and the system further comprises a monitoring register (260) for tracking the address location in the register of information transferred to said medium and control circuitry (120) enabled by said monitoring register for controlling the serial transfer of data from the first and second register portions (A,B) one after the other by applying clock signals to one of said portions (A,B) at a time to effect the transfer of data from that portion until all of the data stored in that portion has been transferred.

2. The graphics processing system according to claim 1, wherein said monitoring register is loaded with the location in the register of the first data position of a new media line and wherein said monitoring register thereafter, for the duration of said transfer of data to said media line, increments to a prefixed count.

3. The graphics processing system according to claim 2, wherein said data to be transferred is contained in rows and columns within a memory (130) and wherein data is moved from said memory locations to said serial register either on a full row by row basis, so that said first and second portions of said serial register contain data from the first half and the second half of a qiven row, respectively, or on a half row basis so that either said first portion or said second portion of said register contains data from the first half or second half, respectively, of the same or different rows.

4. The graphics processing system according to claim 3, further comprising:
an established shift register mask (93); and
a tap point shift register (91) containing bits representative of said first data position, said tap point bits being created by matching said shift register masks against a presented data bit pattern containing row and column address data in said memory.

5. The graphics processing system according to claim 4, further including:
incrementing circuitry (94) for controlling said monitor register in accordance with data being transferred from said serial register.

6. The graphics processing system according to claim 3, further comprising:
a row address register (Fig.15) for controlling said data movement to said serial register on said half row basis.

7. A method of producing a graphics display on a graphics presentation medium (170) using a register (140) split into two portions (A,B), each portion being operable for serially transferring data from that portion while allowing the other portion to be reloaded with data at the same time,
characterised in that the method comprises the steps of:
providing the split register (140) as a serial register,
further providing a monitoring register (260),
using the monitoring register (260) to track the address location in the split register (140) of data as it is transferred to the presentation medium, and
controlling, by reference to the address location tracked by the monitoring register (260), the serial transfer of data from the two portions (A,B) of the split register (140) one after the other by applying clock signals to one of the portions (A,B) at a time to effect the transfer of data from that portion until all of the data stored in that portion has been transferred.

8. A method according to claim 7, characterised by providing a memory (130) having rows and columns storing the data for reloading the portions (A,B) of the split register (140) and in that the controlling of the serial transfer of data from the split register (140) includes accepting an address location within the memory of any column position in any row of the memory for transferring the data from that row to the split register (140), and calculating on the basis of the accepted address location the position in the split register of the first data position of a new line of the presentation medium.

9. A method according to claim 8, wherein said data is transferred to the presentation medium on a pixel by pixel basis.

10. A method according to claim 8 or 9, wherein said controlling step includes the steps of:
developing a bit mask;
creating a tap point representative of said first data position, said tap point being created by matching said bit mask against a presented data bit pattern containing said row and column address data, and
counting the data storage positions on said split register beginning with the position within said split register corresponding to said tap point.

11. A method according to claim 10, further including the steps of:
loading a counter with the binary value of said tap point; and
incrementing said counter along with the transfer of data from said split register.

## Patentansprüche

1. Verarbeitungssystem für Graphiken, umfassend:
ein Medium (170) zur Darstellung von Graphiken; und
ein geteiltes Register (140) zum seriellen Übertragen von Daten zu dem Medium Zeile für Zeile, wobei das Register einen ersten Teil (A) und einen zweiten Teil (B) enthält und jeder Teil während der Übertragung von Daten von dem anderen Teil neu ladbar ist;
dadurch gekennzeichnet, daß das Register (140) ein serielles Register ist und das System darüber hinaus ein Überwachungsregister (260) zum Verfolgen der im Register befindlichen Adressstelle der zu dem Medium übertragenen Information und eine von dem Überwachungsregister aktivierte Steuerschaltungsanordnung (120) enthält, um die serielle Übertragung von Daten nacheinander von dem ersten und dem zweiten Registerteil (A, B) durch Anlegen von Taktsignalen zu immer nur einem der Teile (A, B) zu steuern, um die Übertragung von Daten von diesem Teil zu bewirken, bis alle in diesem Teil gespeicherten Daten übertragen worden sind.

2. Verarbeitungssystem für Graphiken nach Anspruch 1, bei dem das Überwachungsregister mit der im Register befindlichen Stelle der ersten Datenposition einer neuen Medienzeile geladen wird und bei dem danach das Überwachungsregister, während der Dauer der Übertragung von Daten zu der Medienzeile, bis zu einem vorher festgelegten Zählerstand inkrementiert wird.

3. Verarbeitungssystem für Graphiken nach Anspruch 2, bei dem die zu übertragenden Daten in Zeilen und Spalten innerhalb eines Speichers (130) enthalten sind und bei dem die Daten von den Speicherstellen zu dem seriellen Register entweder Vollzeile für Vollzeile übertragen werden, so daß der erste und der zweite Teil des seriellen Registers Daten aus der ersten Hälfte bzw. aus der zweiten Hälfte einer gegebenen Zeile enthält, oder in halben Zeilen übertragen werden, so daß entweder der erste Teil oder der zweite Teil des Registers Daten aus der ersten Hälfte bzw. der zweiten Hälfte derselben oder verschiedener Zeilen enthält.

4. Verarbeitungssystem für Graphiken nach Anspruch 3, darüber hinaus umfassend:
eine angefertigte Schieberegistermaske (93); und
ein Schieberegister (91) für den Anfangspunkt, das Bits enthält, die die erste Datenposition repräsentieren, wobei die Bits für den Anfangspunkt durch Anpassen der Schieberegistermasken an ein vorliegendes Datenbitmuster erzeugt werden, das Zeilen- und Spaltenadressdaten in dem Speicher enthält.

5. Verarbeitungssystem für Graphiken nach Anspruch 4, darüber hinaus enthaltend:
eine Inkrementierungsschaltungsanordnung (94) zur Steuerung des Überwachungsregisters in Übereinstimmung mit den Daten, die vom seriellen Register übertragen werden.

6. Verarbeitungssystem für Graphiken nach Anspruch 3, darüber hinaus umfassend:
ein Zeilenadressregister (Fig. 15) zur Steuerung der Datenübertragung zum seriellen Register in halben Zeilen.

7. Verfahren zur Herstellung einer Graphikanzeige auf einem Medium (170) zur Darstellung von Graphiken, bei dem man ein in zwei Teile (A, B) geteiltes Register (140) verwendet, wobei jeder Teil zum seriellen Übertragen von Daten von diesem Teil betrieben werden kann, während dem anderen Teil ermöglicht wird, zur gleichen Zeit mit Daten geladen zu werden, dadurch gekennzeichnet, daß das Verfahren die Schritte umfaßt:
ein geteiltes Register (140) wird als ein serielles Register vorgesehen,
darüber hinaus wird ein Überwachungsregister (260) vorgesehen,
das Überwachungsregisters (260) wird verwendet, um die in dem geteilten Register (140) befindliche Adressstelle von Daten zu verfolgen, wenn diese zum Darstellungsmedium übertragen werden, und
die serielle Übertragung von Daten von den zwei Teilen (A, B) des geteilten Registers (140) wird, unter Bezug auf die durch das Überwachungsregister (260) verfolgte Adressstelle, nacheinander durch Anlegen von Taktsignalen zu immer nur einem der Teile (A, B) gesteuert, um die Übertragung von Daten von diesem Teil zu bewirken, bis alle in diesem Teil gespeicherten Daten übertragen worden sind.

8. Verfahren nach Anspruch 7, dadurch gekennzeichnet, daß ein Speicher (130) mit Zeilen und Spalten vorgesehen wird, der die Daten zum Neuladen der Teile (A, B) des geteilten Registers (140) speichert, und dadurch, daß das Steuern der seriellen Übertragung von Daten von dem geteilten Register (140) das Annehmen einer im Speicher befindlichen Adressstelle irgendeiner Spaltenposition in irgendeiner Zeile des Speichers für die Übertragung der Daten von dieser Zeile zu dem geteilten Register (140) und das Berechnen der in dem geteilten Register befindlichen Position der ersten Datenposition einer neuen Zeile des Darstellungsmediums auf der Basis der angenommenen Adreßstelle enthält.

9. Verfahren nach Anspruch 8, bei dem die Daten zum Darstellungsmedium pixelweise übertragen werden.

10. Verfahren nach Anspruch 8 oder 9, bei dem der Schritt des Steuerns die Schritte enthält:
Entwickeln einer Bitmaske;
Erzeugen eines Anfangspunkts, der die erste Datenposition repräsentiert, wobei der Anfangspunkt durch Anpassen der Bitmaske an ein vorliegendes Datenbitmuster erzeugt wird, das die Zeilen- und Spaltenadressdaten enthält, und
Zählen der Positionen der Datenspeicherung auf dem geteilten Register, beginnend mit der Position innerhalb des geteilten Registers, die dem Anfangspunkt entspricht.

11. Verfahren nach Anspruch 10, darüber hinaus enthaltend die Schritte:
Laden eines Zählers mit den binären Werten des Anfangspunkts; und
Inkrementieren des Zählers zusammen mit der Übertragung von Daten von dem geteilten Register.

## Revendications

1. Système de traitement de graphiques comprenant :
- un moyen de présentation (170) de graphiques ; et
- un registre divisé (140) destiné à transférer en série des données sur une base de ligne par ligne audit moyen, le registre comprenant une première partie (A) et une deuxième partie (B), chaque partie pouvant être chargée à nouveau au cours du transfert de données depuis l'autre partie ;
caractérisé en ce que le registre (140) est un registre série et le système comprend en outre un registre de contrôle (260) destiné à suivre l'emplacement d'une adresse dans le registre d'informations transféré audit moyen et un circuit de commande (120) activé par ledit registre de contrôle de manière à commander le transfert en série de données depuis les première et deuxième parties de registre (A, B) les unes après les autres par application de signaux d'horloge à l'une desdites parties (A, B) en un instant pour réaliser le transfert de données depuis ladite partie jusqu'à ce que l'ensemble des données stockées dans cette partie ait été transféré.

2. Système de traitement de graphiques selon la revendication 1, dans lequel ledit registre de contrôle est chargé avec l'emplacement dans le registre de la première position de données d'une nouvelle ligne de support et dans lequel ledit registre de contrôle incrémente ensuite un compte prédéterminé pour la durée dudit transfert de données à ladite ligne de support.

3. Système de traitement de graphiques selon la revendication 2, dans lequel lesdites données à transférer sont contenues en rangées et colonnes à l'intérieur d'une mémoire (130) et dans lequel les données sont déplacées depuis lesdits emplacements de mémoire jusqu'audit registre série, soit sur une base rangée entière par rangée entière, afin que les première et deuxième parties dudit registre série contiennent des données venues de la première moitié et de la deuxième moitié d'une rangée donnée, respectivement, soit sur une base d'une moitié de rangée de manière à ce que soit la première partie, soit la deuxième partie dudit registre contienne des données venues de la première moitié ou de la deuxième moitié, respectivement, des mêmes rangées ou de rangées différentes.

4. Système de traitement de graphiques selon la revendication 3, comprenant en outre :
- un masque établi (93) de registre à décalage ; et
- un registre à décalage (91) à points de prélèvement comprenant des bits représentatifs de ladite première position de données, lesdits bits de point de prélèvement étant créés en faisant correspondre lesdits masques de registre à décalage avec une configuration donnée de bits de données contenant des données d'adresse de colonnes et de rangées dans ladite mémoire.

5. Système de traitement de graphiques selon la revendication 4, comprenant en outre :
- un circuit d'incrémentation (94) destiné à commander ledit registre de contrôle en fonction des données transférées depuis ledit registre série.

6. Système de traitement de graphiques selon la revendication 3, comprenant en outre :
- un registre d'adresses de rangées (figure 15) destiné à commander ledit déplacement de données vers ledit registre série sur ladite base d'une moitié de rangée.

7. Procédé d'obtention d'un affichage de graphiques sur un moyen de présentation (170) de graphiques en utilisant un registre (140) divisé en deux parties (A, B), chaque partie pouvant être activée pour transférer en série des données depuis ladite partie tout en permettant à l'autre partie d'être à nouveau chargée simultanément avec des données, caractérisé en ce que le procédé comprend les étapes consistant à :
- fournir un registre divisé (140) en tant que registre série,
- fournir en outre un registre de contrôle (260),
- utiliser le registre de contrôle (260) pour suivre l'emplacement d'une adresse dans le registre divisé (140) de données lorsqu'elle est transférée au moyen de présentation, et
- commander, en référence à l'emplacement d'adresse suivi par le registre de contrôle (260), le transfert en série de données depuis les deux parties (A, B) du registre divisé (140) les unes après les autres par application de signaux d'horloge à l'une des parties (A, B), en un instant pour réaliser le transfert de données depuis ladite partie jusqu'à ce que l'ensemble des données stockées dans cette partie ait été transféré.

8. Procédé selon la revendication 7, caractérisé par l'utilisation d'une mémoire (130) possédant des rangées et des colonnes stockant les données afin de charger à nouveau les parties (A, B) du registre divisé (140) et en ce que la commande du transfert en série de données depuis le registre divisé (140) comporte l'acceptation d'un emplacement d'adresse à l'intérieur de la mémoire de n'importe quel position de colonne dans n'importe quelle rangée de la mémoire de manière à transférer les données depuis ladite rangée vers le registre divisé (140), et par le calcul, sur la base de l'emplacement d'adresse accepté, de la position dans le registre divisé de la première position de données d'une nouvelle ligne du moyen de présentation.

9. Procédé selon la revendication 8, dans lequel lesdites données sont transférées au moyen de présentation sur la base d'élément d'image par élément d'image.

10. Procédé selon la revendication 8 ou 9, dans lequel ladite étape de commande comporte les étapes consistant à :
- développer un masque de bits ;
- créer un point de prélèvement représentatif de ladite première position de données, ledit point de prélèvement étant créé en faisant correspondre ledit masque de bits avec une configuration donnée de bits de données contenant lesdites données d'adresses de colonnes et de rangées, et
- compter les positions de stockage de données sur ledit registre divisé en commençant avec la position à l'intérieur dudit registre de données correspondant audit point de prélèvement.

11. Procédé selon la revendication 10, comprenant en outre les étapes consistant à :
- charger un compteur avec la valeur binaire dudit point de prélèvement ; et
- incrémenter ledit compteur au cours du transfert de données depuis le registre divisé.
